# EUROPÄISCHE PATENTSCHRIFT

(11) **EP 1 910 698 B1**
(45) Veröffentlichungstag und Bekanntmachung des Hinweises auf die Patenterteilung: **22.09.2010**
(21) Anmeldenummer: 06776175.9
(22) Anmeldetag: 11.07.2006
(51) Int. Cl.: F16D 41/067, F16D 1/08

(54) **HÜLSEN-/ ROLLENFREILAUF MIT MASSIVEM AUSSENRING**
SLEEVE/ROLLER FREEWHEEL WITH A SOLID OUTER RING
ROUE LIBRE A ROULEAUX/DOUILLE POURVUE D'UNE BAGUE EXTERIEURE MASSIVE

(30) Priorität: 21.07.2005 DE 102005034038
(43) Veröffentlichungstag der Anmeldung: 16.04.2008
(73) Patentinhaber: Schaeffler KG, 91074 Herzogenaurach (DE)
(72) Erfinder: ALTMANN, Frieder, 96178 Pommersfelden (DE); DÖRRIE, Swen, 91074 Herzogenaurach (DE); WIRTH, Werner, 91466 Gerhardshofen (DE); PLOETZ, Volker, 91074 Herzogenaurach (DE)
(86) Internationale Anmeldenummer: PCT/EP2006/006743
(87) Internationale Veröffentlichungsnummer: WO 2007/009629

(56) Entgegenhaltungen:
- EP-A- 0 549 824
- DE-A1- 1 750 493
- DE-A1- 1 777 169
- DE-A1- 19 532 923
- US-A- 3 339 687

## Beschreibung

### Gebiet der Erfindung

Hülsen-/Rollenfreilauf, mit einem Innen- und/oder Außenring, mit den Nadeln oder Rollen angepassten Klemmrampen, mit einem Käfig und mit Andruckfedern für die Nadeln oder Rollen, gemäß dem Oberbegriff des Anspruchs 1. Ein derartiger Hülsen-/Rollenfreilauf beispielsweise aus der DE 1 750 493 A1 bekannt.

### Hintergrund der Erfindung

Der aus der DE 1 750 493 A1 bekannte Freilauf weist eine Hülse auf, die aus einem Blechstreifen zusammengebogen und an ihren Enden verbunden, vorzugsweise verschweißt ist. Die Hülse des Freilaufs ist mit Presssitz in eine Bohrung eines Maschinenelements eingesetzt. In ähnlicher Weise ist auch bei aus der US 3,339,687 A sowie aus der DE 1 777 169 A1 bekannten Freilaufkupplungen eine relativ dünnwandige, Klemmrampen aufweisende Hülse in ein massives Maschinenteil eingesetzt.

Klemmrollenfreiläufe in Drehmomentwandlern sind beispielsweise in der EP 0 549 824 A1 sowie in der DE 195 32 923 A1 offenbart. In diesen Fällen, in welchen im Vergleich zu Anwendungsgebieten, in denen typischerweise Hülsenfreiläufe eingesetzt werden, hohe Drehmomente zu übertragen sind, kontaktieren Klemmrollen unmittelbar einen massiven Außenring.

Freiläufe für die Übertragung großer Kräfte sind bekannt. Dabei werden üblicherweise an der Innenfläche des Außenringes Klemmrampen angeformt, die mit den Rollen in Wirkverbindung stehen. Es ist auch möglich, auf der Außenfläche eines Innenringes Klemmrampen anzuordnen. Die Rollen stützen sich weiterhin auf einer glatten Welle bzw. einem glatten Innenring oder auf der Innenfläche eines glatten Außenringes ab. Bei derartigen Freiläufen für hohe Kräfte müssen insbesondere die Außenringe aus Festigkeitsgründen eine hinreichende Dicke aufweisen. Es ist bekannt, die Außenringe durch Sintern herzustellen, wobei allerdings die Festigkeit, insbesondere an den Klemmrampen nicht immer den Anforderungen entspricht. Es ist auch bekannt, insbesondere den Innenraum mit Klemmrampen zu räumen, wozu allerdings aufwändige Abstimmmaßnahmen beim Produktionsablauf erforderlich sind. Ebenso muss während einer Serienfertigung eine detaillierte Werkzeugüberwachung und Planung erfolgen. Die Oberfläche des geräumten Profils ist aufgrund des Herstellungsverfahrens nicht optimal, es kann eine Riefenstruktur entstehen, die die Bruchgefahr erhöhen kann. Auch die Standzeiten eines Räumwerkzeuges sind kurz.

Es kann daher festgehalten werden, dass weder die gesinterten noch die geräumten Ringe, insbesondere Außenringe, von Freiläufen für hohe Kräfte den Anforderungen, insbesondere auch an eine kostengünstige Serienfertigung genügen.

### Aufgabe der Erfindung

Aufgabe der Erfindung ist daher, einen gattungsgemäßen Freilauf dahingehend zu verbessern, dass er einfach und kostengünstig in der Herstellung, insbesondere auch der Serienfertigung, ist und dass er den Qualitätsanforderungen genügt.

### Zusammenfassung der Erfindung

Die Aufgabe der Erfindung wird gelöst durch eine Hülse mit angeformten Klemmrampen und durch einen massiven Innen- oder Außenring, in dem oder auf dem die Hülse befestigt ist.

Es erfolgt also eine Trennung zwischen dem Bereich der Klemmrampen, die aufwändig in der Herstellung sind und dem eigentlichen Tragring, der einfach und kostengünstig hergestellt werden kann. Dabei wird in vorteilhafter Weise die Hülse und der Ring mittels Presssitz aneinander bzw. ineinander befestigt. Die Hülse kann auf zumindest einer Seite eine radial ausgerichtete Ringschulter aufweisen, die einen Anschlag für den Käfig oder die Rollen bildet. Der Innen-Innen- oder Außenring ist an der der Hülse zugewandten Fläche und die Hülse ist an der dem Innen- oder Außenring zugewandten Fläche glatt oder geriffelt ausgeführt, so dass ein umlaufender fester Sitz zwischen den beiden Bauteilen gewährleistet ist und eine vollständige Abstützung der Hülse erfolgt.

In weiterer Ausgestaltung der Erfindung wird vorgeschlagen, dass die Hülse aus dünnem Bandmaterial hergestellt und die Klemmrampen durch Prägen angeformt sind und dass die Hülse zu einem Ring geformt ist, dessen Enden auf Stoß aneinandergefügt sind. Sie können beispielsweise verschweißt sein oder durch den Presssitz im Außenring stirnseitig fest unter Druck stehen. Die Hülsen können aber auch erfindungsgemäß durch Umformen oder Tiefziehen hergestellt sein, wodurch ebenfalls dünnwandige Hülsen entstehen können, bei denen die Klemmrampen angeformt sind.

Durch diese vorgeschlagenen Herstellungsverfahren entstehen Hülsen mit hoher Festigkeit und hoher Oberflächengüte, insbesondere auch an den Klemmrampen, die auch kostengünstig hergestellt werden können.

Der massive Innen- oder Außenring kann auch kostengünstig als einfaches Drehteil hergestellt werden, wobei ein seitlich angeordneter radial ausgerichteter Bund angeformt sein kann, der nach Zusammenfügen des Ringes mit der Hülse auf der der Ringschulter der Hülse abgewandten Seite angeordnet ist.

Der Außen- oder Innenring sowie die Überdeckung zwischen der Hülse und dem Stützring, das heißt dem Außen- beziehungsweise Innenring, sind dabei so zu dimensionieren, dass die Hülse ausreichend unterstützt wird. Auch unter Last ist dabei die begrenzte Festigkeit des Hülsenwerkstoffs zu beachten. Das Dickenverhältnis zwischen der in radialer Richtung gemessenen minimalen Dicke des Außen- oder Innenrings und der Dicke der vom Außen- beziehungsweise Innenring abgestützten Hülse, welche die Klemmrampen aufweist, beträgt mindestens 5 : 1.

Der Außenring ist drehfest in ein umgebendes Bauteil, nämlich in ein Flanschgehäuse oder in ein Leitrad eines Drehmomentwandlers, eingesetzt. Unabhängig davon, ob die Verbindung zwischen dem Außenring des Freilaufs und dem umgebenden Bauteil durch Einpressen oder durch Eingießen hergestellt ist, sind Drehmomente von mehr als 200 Nm übertragbar. Als Werkstoffe zur Herstellung des den Außenring umgebenden Bauteils sind beispielsweise Leichtmetalle, insbesondere Aluminium- oder Magnesiumlegierungen, sowie Kunststoffe geeignet. In sämtlichen Varianten liegt ein besonderer Vorteil darin, dass die Bohrung des Außenrings keine Laufbahnqualität aufzuweisen braucht, insbesondere ohne Wärmebehandlung verwendbar ist.

### Kurze Beschreibung der Zeichnungen

Zur weiteren Erläuterung der Erfindung wird auf die Zeichnungen verwiesen, in denen mehrere Ausführungsbeispiele der Erfindung vereinfacht dargestellt sind. Es zeigen:
- Figur 1: eine perspektivische Ansicht einer Hülse mit angeformten Klemmrampen,
- Figur 2: eine perspektivische Ansicht der Hülse nach Figur 1, mit einem Außenring, in dem die Hülse eingesetzt ist,
- Figur 3: die Hülse nach Figur 1 mit eingesetztem Käfig, Klemmrol- len und Andruckfedern,
- Figur 4 und 5: jeweils einen mit der Hülse nach Figur 3 kompatiblen, zum Einpressen beziehungsweise Eingießen vorgesehenen Außenring,
- Figur 6 und 7 Fig.: eine perspektivische Ansicht sowie eine Schnittdarstellung eines Leitrads eines Drehmomentwandlers mit einer Frei- laufanordnung, welche den eingepressten Außenring nach 4 umfasst,
- Figur 8 und 9: in Darstellungen analog Fig. 6 und 7 ein Leitrad mit einer Freilaufanordnung, welche den eingegossenen Außenring nach Fig. 5 umfasst, und
- Figur 10 bis 13: in Darstellungen analog den Fig. 6 bis 9 ein Flanschgehäu- se mit einer Freilaufanordnung, welche den eingepressten Außenring nach Fig. 4 beziehungsweise den eingegosse- nen Außenring nach Fig. 5 umfasst.

### Detaillierte Beschreibung der Zeichnungen

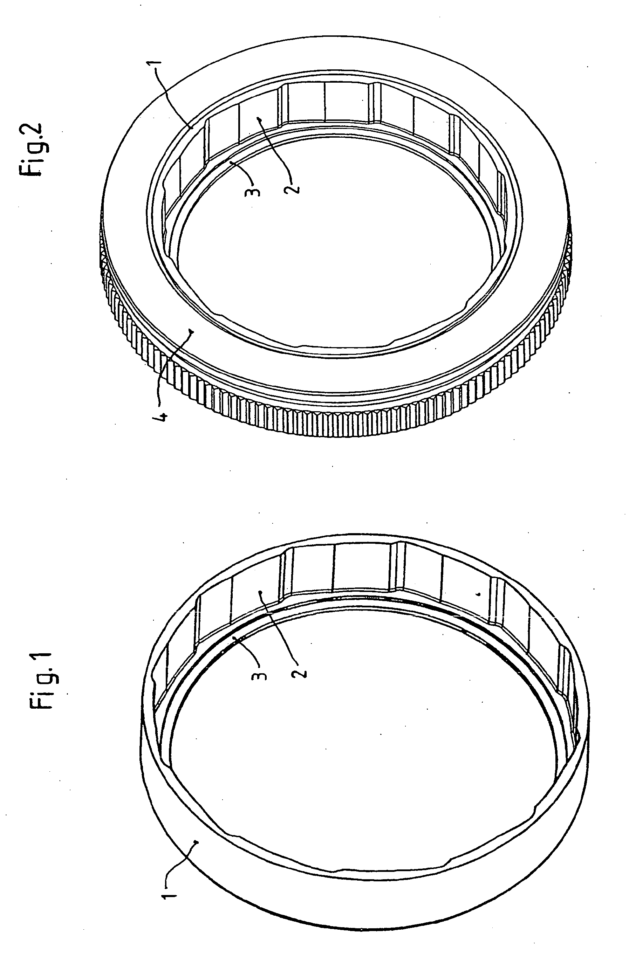

In den Figuren 1 und 2 ist, soweit im Einzelnen dargestellt, mit 1 eine Hülse bezeichnet, auf deren Innenseite Klemmrampen 2 angeformt sind. Die Hülse 1 ist als Blechteil spanlos gefertigt und weist weiterhin neben den Klemmrampen 2 eine mit 3 bezeichnete Ringschulter auf, die radial nach innen gerichtet ist. Auf den Klemmrampen 2 angeordnete, nicht gezeigte Nadeln oder Rollen sind in nicht dargestellter Weise in einem Käfig geführt und werden dabei durch Andruckfedern in ihre jeweilige Klemmposition gedrückt.

Die Hülse 1 ist, wie in Figur 2 dargestellt, in einem mit 4 bezeichneten, als Drehteil gefertigten Außenring eingesetzt und zwar eingepresst, so dass sie sich vollständig am Außenring 4 abstützen kann, der wiederum in einem weiteren Bauteil eingepresst ist, wobei zur Erhöhung des Sitzes auf der Außenseite des Außenrings 4 eine Riffelung angebracht ist. Aufgrund der Klemmrampen 2 weist die Hülse 1 eine uneinheitliche Dicke, auch als Wandstärke bezeichnet, auf. Die in der selben Richtung, also in radialer Richtung, gemessene minimale Dicke des Außenrings 4 beträgt mindestens das Fünffache der geringsten Dicke der Hülse 1. Der Außenring 4 verhindert damit relevante Verformungen der Hülse 1 unter Last, wobei die Stabilität der gesamten Anordnung durch das nicht dargestellte weiter Bauteil, welches ebenfalls aus Metall gefertigt und beispielsweise ein Gussteil, Dreh- oder Frästeil ist, weiter erhöht ist.

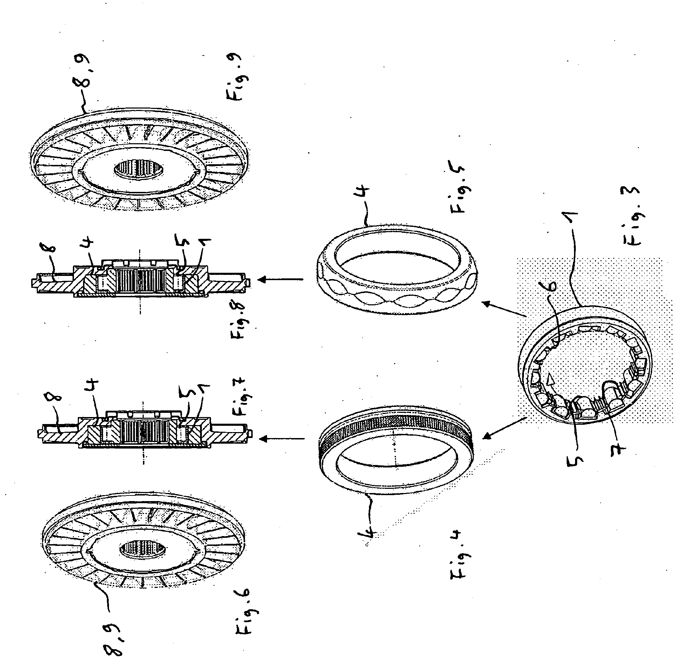

In Figur 3 sind zusätzlich zur Hülse 1 ein in dieser gehaltener oder einstückig mit dieser ausgebildeter Käfig 6 sichtbar, an welchem Andruckfedern 7 befestigt sind, die Klemmrollen 5 permanent mit einer Kraft in Richtung zu deren Klemmposition beaufschlagen. Die Anordnung nach Figur 3 umfasst somit mit Ausnahme des Außenrings 4 alle Teile eines Rollenfreilaufs.

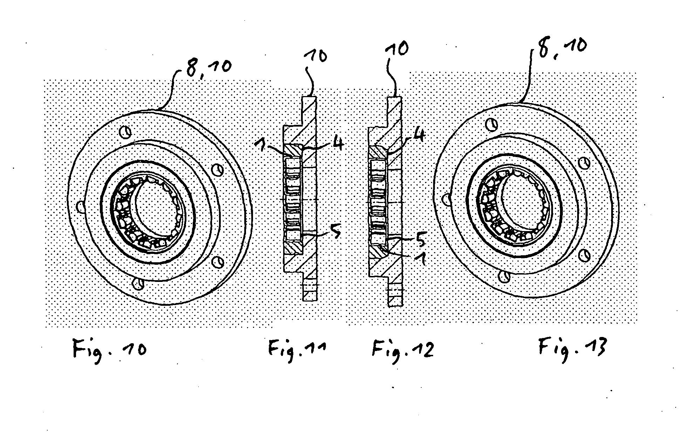

Verschiedene Bauformen eines Außenrings 4, der in der anhand der Figuren 1 und 2 beschriebenen Weise mit der Hülse 1 nach Figur 3 verbindbar ist, sind in den Figuren 4 und 5 dargestellt. Während der geriffelte Außenring 4 nach Figur 4 besonders zum Einpressen in ein umgebendes Bauteil 8 geeignet ist, ist der in Figur 5 dargestellte Außenring 4 zum Eingießen in ein umgebendes Bauteil 8 vorgesehen. In beiden Fällen ist das umgebende Bauteil 8, wie in den Figuren 6 bis 9 erkennbar, ein Leitrad 9 eines nicht weiter dargestellten Drehmomentwandlers. Die Funktion eines Leitrads in einem hydraulischen Drehmomentwandler ist prinzipiell beispielsweise aus der DE 102 30 650 A1 bekannt. Das Leitrad 9, in welches der Außenring 4 eingepresst beziehungsweise eingegossen ist, ist aus Kunststoff oder einer Leichtmetalllegierung hergestellt. Entsprechendes gilt für ein in den Figuren 10 bis 13 dargestelltes Flanschgehäuse 10, welches das den Außenring 4 umgebende Bauteil 8 bildet.

### Bezugszeichenliste

- 1: Hülse
- 2: Klemmrampen
- 3: Ringschulter
- 4: Außenring
- 5: Klemmrolle
- 6: Käfig
- 7: Andruckfeder
- 8: Bauteil
- 9: Leitrad
- 10: Flanschgehäuse

## Patentansprüche

1. Hülsen-/Rollenfreilauf mit einem Innen- und/oder Außenring (4), mit den Nadeln oder Rollen (5) angepassten Klemmrampen (2), mit einem Käfig (6) und mit Andruckfedern (7) für die Nadeln oder Rollen (5), sowie mit einer Hülse (1) mit angeformten Klemmrampen (2), wobei der Innen- oder Außenring (4) massiv ausgebildet und auf oder in diesem die Hülse (1) befestigt ist, **gekennzeichnet durch** ein den Außenring (4) umgebendes Bauteil (8), nämlich ein Leitrad (9) eines Drehmomentwandlers, in welches der Außenring (4) drehfest eingesetzt ist, wobei die minimale Dicke des Außenrings (4) mindestens das Fünffache der geringsten Dicke der Hülse (1) beträgt und das zwischen Innen- und Außenring (4) übertragbare Drehmoment mindestens 200 Nm beträgt.

2. Hülsen-/Rollenfreilauf nach Anspruch 1, **dadurch gekennzeichnet, dass** der Innen- oder Außenring (4) an der der Hülse (1) zugewandten Fläche und/oder die Hülse (1) an der dem Innen- oder Außenring (4) zugewandten Fläche glatt oder geriffelt ausgeführt sind.

3. Hülsen-/Rollenfreilauf nach einem der Ansprüche 1 oder 2, **dadurch gekennzeichnet, dass** die Hülse (1) und der Innen- oder Außenring (4) mittels Presssitz gegeneinander abgestützt sind.

4. Hülsen-/Rollenfreilauf nach einem der vorhergehenden Ansprüche, **dadurch gekennzeichnet, dass** die Hülse (1) zumindest auf einer Seite eine radial ausgerichtete Ringschulter (3) aufweist.

5. Hülsen-/Rollenfreilauf nach einem der vorhergehenden Ansprüche, **dadurch gekennzeichnet, dass** die Hülse (1) mit Klemmrampen (2) und ggf. der Ringschulter (3) durch Umformen oder Tiefziehen hergestellt ist.

6. Hülsen-/Rollenfreilauf nach einem der vorhergehenden Ansprüche, **dadurch gekennzeichnet, dass** die Hülse (1) aus Bandmaterial mit angeformten Klemmrampen (2) durch Prägen hergestellt ist und dass die Hülse (1) zu einem Ring geformt ist, dessen Enden auf Stoß aneinandergefügt sind.

7. Hülsen-/Rollenfreilauf nach einem der vorhergehenden Ansprüche, **dadurch gekennzeichnet, dass** der massive Innen- oder Außenring (4) einen seitlich angeordneten radial ausgerichteten Bund aufweist, der nach Zusammenfügen des Ringes (Außenring 4) mit der Hülse (1) auf der der Ringschulter (3) der Hülse (1) abgewandten Seite angeordnet ist.

8. Hülsen-/Rollenfreilauf nach einem der vorhergehenden Ansprüche, **dadurch gekennzeichnet, dass** der Außenring (4) in das umgebende Bauteil (8) eingegossen ist.

9. Hülsen-/Rollenfreilauf nach einem der vorhergehenden Ansprüche, **dadurch gekennzeichnet, dass** der Außenring (4) in das umgebende Bauteil (8) eingepresst ist.

10. Hülsen-/Rollenfreilauf nach einem der vorhergehenden Ansprüche, **dadurch gekennzeichnet, dass** das umgebende Bauteil (8) aus Kunststoff gefertigt ist.

11. Hülsen-/Rollenfreilauf nach einem der vorhergehenden Ansprüche, **dadurch gekennzeichnet, dass** das umgebende Bauteil (8) aus Leichtmetall gefertigt ist.

12. Hülsen-/Rollenfreilauf mit einem Innen- und/oder Außenring (4), mit den Nadeln oder Rollen (5) angepassten Klemmrampen (2), mit einem Käfig (6) und mit Andruckfedern (7) für die Nadeln oder Rollen (5), sowie mit einer Hülse (1) mit angeformten Klemmrampen (2), wobei der Innen- oder Außenring (4) massiv ausgebildet und auf oder in diesem die Hülse (1) befestigt ist, **gekennzeichnet durch** ein den Außenring (4) umgebendes Bauteil (8), nämlich ein Flanschgehäuse, in welches der Außenring (4) drehfest eingesetzt ist, wobei die minimale Dicke des Außenrings (4) mindestens das Fünffache der geringsten Dicke der Hülse (1) beträgt und das zwischen Innen- und Außenring (4) übertragbare Drehmoment mindestens 200 Nm beträgt.

## Claims

1. Sleeve/roller freewheel with an inner and/or outer ring (4), with clamping ramps (2) matched to the needles or rollers (5), with a cage (6) and with press-on springs (7) for the needles or rollers (5), and with a sleeve (1) having clamping ramps (2) integrally formed thereon, wherein the inner or outer ring (4) is of solid design and the sleeve (1) is fastened thereon or therein, **characterized by** a component (8), namely a guide wheel (9) of a torque converter, which surrounds the outer ring (4) and into which the outer ring (4) is inserted in a rotationally fixed manner, the minimum thickness of the outer ring (4) being at least five times the smallest thickness of the sleeve (1) and the torque which can be transmitted between the inner and outer ring (4) being at least 200 Nm.

2. Sleeve/roller freewheel according to Claim 1, **characterized in that that** surface of the inner or outer ring (4) which faces the sleeve (1) and/or that surface of the sleeve (1) which faces the inner or outer ring (4) are/is of smooth or corrugated design.

3. Sleeve/roller freewheel according to either of Claims 1 and 2, **characterized in that** the sleeve (1) and the inner or outer ring (4) are supported against each other by means of a press fit.

4. Sleeve/roller freewheel according to one of the preceding claims, **characterized in that** the sleeve (1) has a radically oriented annular shoulder (3) at least on one side.

5. Sleeve/roller freewheel according to one of the preceding claims, **characterized in that** the sleeve (1) together with clamping ramps (2) and, if appropriate, the annular shoulder (3) is produced by deformation or deep-drawing.

6. Sleeve/roller freewheel according to one of the preceding claims, **characterized in that** the sleeve (1) is produced from strip stock with clamping ramps (2) integrally formed thereon by stamping, and **in that** the sleeve (1) is shaped to form a ring, the ends of which are joined together in an abutting relationship.

7. Sleeve/roller freewheel according to one of the preceding claims, **characterized in that** the solid inner or outer ring (4) has a laterally arranged, radially oriented collar which, after the ring (outer ring 4) is joined to the sleeve (1), is arranged on the side facing away from the annular shoulder (3) of the sleeve (1).

8. Sleeve/roller freewheel according to one of the preceding claims, **characterized in that** the outer ring (4) is cast into the surrounding component (8).

9. Sleeve/roller freewheel according to one of the preceding claims, **characterized in that** the outer ring (4) is pressed into the surrounding component (8).

10. Sleeve/roller freewheel according to one of the preceding claims, **characterized in that** the surrounding component (8) is manufactured from plastic.

11. Sleeve/roller freewheel according to one of the preceding claims, **characterized in that** the surrounding component (8) is manufactured from light metal.

12. Sleeve/roller freewheel with an inner and/or outer ring (4), with clamping ramps (2) matched to the needles or rollers (5), with a cage (6) and with press-on springs (7) for the needles or rollers (5), and with a sleeve (1) having clamping ramps (2) integrally formed thereof, herein the inner or outer ring (4) is of solid design and the sleeve (1) is fastened thereon or therein, **characterized by** a component (8), namely a flange housing, which surrounds the outer ring (4) and into which the outer ring (4) is inserted in a rotationally fixed manner, the minimum thickness of the outer ring (4) being at least five times the smallest thickness of the sleeve (1) and the torque which can be transmitted between the inner and outer ring (4) being at least 200 Nm.

## Revendications

1. Roue libre à douille/rouleau comprenant une bague intérieure et/ou extérieure (4), avec des rampes de serrage (2) adaptées aux aiguilles ou aux rouleaux (5), avec une cage (6) et avec des ressorts de pression (7) pour les aiguilles ou les rouleaux (5), et avec une douille (1) avec des rampes de serrage façonnées (2), la bague intérieure ou extérieure (4) étant réalisée sous forme massive et la douille (1) étant fixée sur ou dans celle-ci, **caractérisée par** un composant (8) entourant la bague extérieure (4), à savoir une roue directrice (9) d'un convertisseur de couple, dans laquelle la bague extérieure (4) est insérée de manière solidaire en rotation, l'épaisseur minimale de la bague extérieure (4) valant au moins cinq fois l'épaisseur minimale de la douille (1), et le couple transmissible entre les bagues intérieure et extérieure (4) valant au moins 200 Nm.

2. Roue libre à douille/rouleau selon la revendication 1, **caractérisée en ce que** la bague intérieure ou extérieure (4) sur la surface tournée vers la douille (1), et/ou la douille (1) sur la surface tournée vers la bague intérieure ou extérieure (4) sont réalisées sous forme lisse ou rainurée.

3. Roue libre à douille/rouleau selon l'une quelconque des revendications 1 ou 2, **caractérisée en ce que** la douille (1) et la bague intérieure ou extérieure (4) sont supportées l'une contre l'autre par un ajustement par pressage.

4. Roue libre à douille/rouleau selon l'une quelconque des revendications précédentes, **caractérisée en ce que** la douille (1) présente au moins d'un côté un épaulement annulaire (3) orienté radialement.

5. Roue libre à douille/rouleau selon l'une quelconque des revendications précédentes, **caractérisée en ce que** la douille (1) avec des rampes de serrage (2) et éventuellement l'épaulement annulaire (3) est fabriquée par façonnage ou emboutissage profond.

6. Roue libre à douille/rouleau selon l'une quelconque des revendications précédentes, **caractérisée en ce que** la douille (1) est fabriquée par gaufrage à partir de matériau en bande avec des rampes de servage façonnées (2), et **en ce que** la douille (1) est formée en une bague, dont les extrémités sont assemblées l'une à l'autre bout à bout.

7. Roue libre à douille/rouleau selon l'une quelconque des revendications précédentes, **caractérisée en ce que** la bague intérieure ou extérieure massive (4) présente un rebord orienté radialement et disposé latéralement, qui, après l'assemblage de la bague (bague extérieure 4) à la douille (1), est disposé du côté opposé à l'épaulement annulaire (3) de la douille (1).

8. Roue libre à douille/rouleau selon l'une quelconque des revendications précédentes, **caractérisée en ce que** la bague extérieure (4) est coulée dans le composant (8) qui l'entoure.

9. Roue libre à douille/rouleau selon l'une quelconque des revendications précédentes, **caractérisée en ce que** la bague extérieure (4) est pressée dans le composant (8) qui l'entoure.

10. Roue libre à douille/rouleau selon l'une quelconque des revendications précédentes, **caractérisée en ce que** le composant d'enveloppement (8) est fabriqué en plastique.

11. Roue libre à douille/rouleau selon l'une quelconque des revendications précédentes, **caractérisée en ce que** le composant d'enveloppement (8) est fabriqué en métal léger.

12. Roue libre à douille/rouleau comprenant une (des) bagues intérieure et/ou extérieure (4), avec des rampes de serrage (2) adaptées aux aiguilles ou aux rouleaux (5), avec une cage (6) et avec des ressorts de pression (7) pour les aiguilles ou les rouleaux (5), et avec une douille (1) avec des rampes de serrage façonnées (2), la bague intérieure ou extérieure (4) étant réalisée sous forme massive et la douille (1) étant fixée sur ou dans celle-ci, **caractérisée par** un composant (8) entourant la bague extérieure (4), à savoir un boîtier à bride, dans lequel la bague extérieure (4) est insérée de manière solidaire en rotation, l'épaisseur minimale de la bague extérieure (4) valant au moins cinq fois l'épaisseur minimale de la douille (1), et le couple transmissible entre les bagues intérieure et extérieure (4) valant au moins 200 Nm.
